# EUROPEAN PATENT SPECIFICATION

(11) **EP 2 322 988 B1**
(45) Date of publication and mention of the grant of the patent: **28.11.2012**
(21) Application number: 09811023.2
(22) Date of filing: 21.08.2009
(51) Int. Cl.: G03B 17/08

(54) **WATERPROOF CAMERA SEALING DEVICE AND SEALING METHOD THEREOF**
WASSERFESTE KAMERAVERSCHLUSSVORRICHTUNG UND VERSCHLUSSVERFAHREN DAFÜR
DISPOSITIF DE FERMETURE D'UNE CAMÉRA ÉTANCHE ET PROCÉDÉ DE FERMETURE ASSOCIÉ

(30) Priority: 08.09.2008 CN 200810071736
(43) Date of publication of application: 18.05.2011
(73) Proprietor: Tung Thih Electron (Xiamen) Co., Ltd., Fujian 361006 (CN)
(72) Inventor: CHEN, Sen-jung, Xiamen Fujian 361006 (CN); GONG, Jun-ping, Xiamen Fujian 361006 (CN); HU, Guang-hui, Xiamen Fujian 361006 (CN)
(74) Representative: Chaillot, Geneviève
(86) International application number: PCT/CN2009/073402
(87) International publication number: WO 2010/025648

(56) References cited:
- EP-A2- 0 478 113
- CN-A- 101 135 829
- CN-A- 101 354 520
- JP-A- 10 318 874
- JP-A- 57 017 944
- JP-A- 2000 352 752
- JP-A- 2001 333 814
- JP-A- 2006 146 020
- US-A- 4 485 398
- US-A- 4 771 320
- US-A- 5 305 031
- US-A1- 2003 053 806

## Description

### BACKGROUND OF THE INVENTION

### 1. Field of the Invention

The present invention relates to a camera, especially to a waterproof camera sealing method.

### 2. Description of the Related Art

Generally, waterproof cameras are extensively applied in shafts, water, and cars.

Existing waterproof camera includes a lens, a chamber body, a circuit board, and lines. The lens and the chamber body are engaged in a sealed state. The circuit board is disposed in the chamber body; the lines and the chamber body are engaged in a sealed state. Afore sealed sate is usually achieved through a disposition of a sealing ring or through welding. Such conventional sealing means is unavailable for meeting today's requirements on the product and on the quality of the waterproof camera. The reasons are as follow:
1. The sealing performance is difficult to be inspected during the producing process, so the inspection will be only executed after the product is completed. Herein, such inspection has to break the finished product, which results in a high inspecting cost. Moreover, a single qualification of the inspected product does not mean the batch of products is all qualified.
2. There are mainly two methods for inspecting the sealing performance while the waterproof camera is applied in cars. A. External Pressurization: The lens is poured by the water with a certain pressure so as to test the waterproof efficiency of the product. Under a room temperature, the lens bears a spurt of the water flow (the water pressure is 3kgf/cm², the diameter of the spurting hole is 1.2mem/40, the spurting amount is 39.2L/mm, and the time is 1 hour). If no mist occurs on the lens, it means the product will function well after being electrified. B. Temperature Difference Method: The waterproof performance is tested via observing if there is steam spread on the lens while the lens is set in a large temperature difference. Herein, the lens is placed in a tank with the water of a constant temperature (80 °C). After thirty minutes, the lens is further placed in a tank with the water mixture of 0°C for another thirty minutes. The lens is placed in the water of the constant temperature and in the water mixture of 0°C for a circulation of three times. After the circulation, if there is no mist existing on the lens, it means the product will function well after being electrified.
   However, there are shortcomings existing in afore two inspecting methods like time wasting and untimely problem finding. Moreover, the inspection can neither be executed on every single product, nor be accomplished on the product line. Therefore, many unserviceable items are remained, and repeated working has to be carried out, which adversely increases the manufacturing cost.
   Some business adopts a simplified temperature difference method for testing the waterproof performance. Practically, the lens is placed in a tank with a room temperature for 2-5 minutes after the lens is placed in a tank with the water of a temperature between 65~85°C. Thence, observe if there are bubbles bursting out. If there is no mist existing on the lens, the product will function well after being electrified.
   However, there is also shortcoming existing in such simplified temperature difference method. Namely, the inspecting is rather long, so the producing line may be delayed. Moreover, the dimension of the camera lens is actually not large, so there is also not much air existing in the camera lens. Therefore, an obvious shrinkage of the air is hard to be observed. Namely, there is too little air existing in the camera lens to expand when hot and to shrink when cold. As a result, a latent unqualified product might be disregarded (since few bubbles will burst out from the camera lens). Herein, such inspection is actually not precise for finding out incompetent products.
3. The efficiency of the existing product is unstable, or the using life of the same is unsatisfactory. Moreover, there is air sealed in the chamber body of the camera, so the air might react with the product material and the sealing material after a period of using time. Herein, such reaction adversely brings about erosion and the product will be discarded soon.

There are few studies on the sealing method of the camera. Herein, a Chinese patent publication No. CN2585255 discloses a video camera applied in the shaft. Wherein, a bulb stand provided with a light source and a lens stand is installed at a left side of a housing. A sealing body is arranged at a right side of the housing. An optical glass is disposed on the lens stand. A bakelite heat insulating layer with vacuum thermal insulating layer is disposed around a periphery between the lens stand in the housing and a thermos plug. A CCD camera is disposed at a left side in the vacuum thermal insulating layer. A CCD video amplifier circuit board is disposed at a right side in the vacuum thermal insulating layer. A heat absorbing and dispersing layer is disposed between the CCD camera and the CCD video amplifier circuit board. There is no further study on the sealing body disclosed in this patent application, and inspecting method during production for the waterproof camera is not disclosed, either.

US 4,485,398A in the names of Chapin Jr and Herbert *et al* discloses an underwater television camera system for use in high pressure dense shielding applications, and although this patent discusses the removal of air from a camera casing it does not disclose a valve sealed with a sealing glue.

US 5,305,031A in the name of Hayakawa Masahiro discloses a sealed camera case, but it does not disclose the step of testing the seal by putting the camera into water to observe bubbles, instead a pressure gauge is used.

JP 10,318,874 in the name of Rhythm Watch Co. discloses placing a camera into water in order to detect bubbles.

### SUMMARY OF THE INVENTION

The present invention is to provide a reliable sealing means that is able to timely inspect the sealing proficiency of the product during the production. Afore means and device especially contribute to a prompt, easy, precise, and low cost inspection that allows the using life of the product to be elongated.

Afore object is achieved by following means:
A sealing method for a waterproof camera includes steps of:
   (1) installing a charging valve installation hole on a chamber body of the waterproof camera;
   (2) assembling a camera lens, a circuit board, a data line, and the chamber body into a waterproof camera semi-finished product;
   (3) installing a charging valve inside the charging valve installation hole on the chamber body;
   (4) filling the chamber body with air;
   (5) pouring the waterproof camera semi-finished product into water and observing if there are any continuous bubbles bursting out; inspecting a sealing performance of the camera lens via afore observation and separating an unqualified lens that busts out bubbles;
   (6) pumping air out of the chamber body of the camera whose sealing performance is observed qualified for leaving a vacuum;
   (7) filling idler gas into the chamber body; and
   (8) sealing the charging installation hole with the waterproof sealing glue; thus obtaining the finished waterproof camera with sealing completed.

Preferably, an air pressure in the chamber body in step (4) adopts 0.3-0.8MPa.

Preferably, a vacuity of the vacuum in step (6) is -0.02~0.04MPa.

Preferably, the pressure of the idler gas in the chamber body in step (7) is 0.3-0.8MPa.

By means of the one-way charging valve disposed on the chamber body of the camera, random charging or discharging of the air could be conducted freely. Favorably, the waterproof camera semi-finished product will not be broken for inspection; the air pressure could be maintained after charging. Further, the sealing proficiency of present invention could be inspected during the production, so no finished product would be broken for inspection. Obviously, the means is convenient and the inspecting time is greatly shortened. While the unqualified semi-finished product is eliminated during the production, the inferior half-finished goods would not go through the next working procedure. Therefore, the productivity is enhanced, the wastage is reduced, and the loss is also decreased. While the test on the sealing efficiency is regarded as a total inspecting means during the production, the working efficiency could be evidently enhanced. Moreover, the idler gas further charged in the chamber body not only does not react with the electronic parts installed therein but also preferably obstructs the air from contacting the electronic parts. Therefore, the anticorrosive effect of the present invention is superior, which elongates the using time thereof.

### BRIEF DESCRIPTION OF THE DRAWINGS

Fig. **1** is a schematic view showing the waterproof camera of the present invention;
Fig. **2** is an enlarged view showing the A area of Fig. 1; and
Fig. **3** is a schematic view showing a charging valve of the present invention.

### DETAILED DESCRIPTION OF THE PREFERRED EMBODIMENTS

Following embodiments are depicted along with Figures for reference.

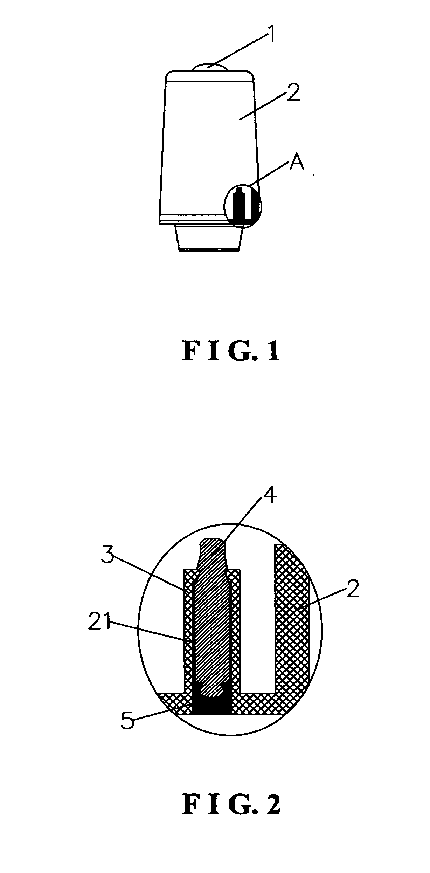

Figs. **1** and **2** show a waterproof camera sealing device comprising a camera lens 1, a chamber body 2, a circuit board (not shown), and a data line (not shown). A charging valve 3 is installed on a rear bottom in the chamber body 2. A charging valve installation hole 21 that is communicated with the air is disposed on the charging valve 3. A one-way charging valve 4 is installed in the charging valve installation hole 21. A waterproof sealing glue 5 seals the one-way charging valve 4 in the charging valve installation hole 21. The chamber body 2 is filled with nitrogen.

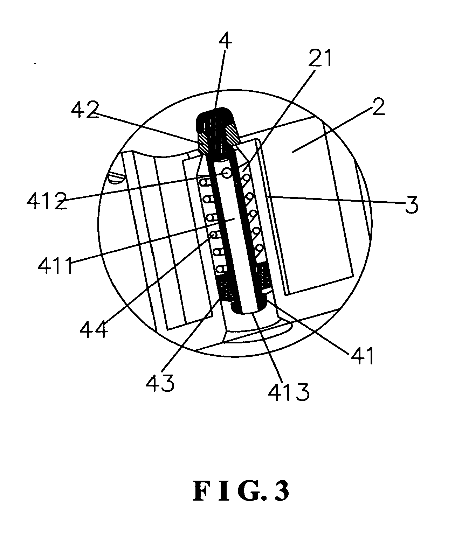

Referring to Fig. 3, the one-way charging valve 4 includes a guiding core 41, an upper sealing ring 42, a lower sealing ring 43, and a spring 44. The guiding core 41 has a guiding hole 411. Herein, the upper sealing ring 42 covers an upper end of the guiding core 41, the lower sealing ring 43 covers a lower end of the guiding core 41, and the spring 44 covers the guiding core 41. A charging hole 413 of the guiding core 41 is exposed to the exterior for air charging. A discharging hole 412 of the guiding core 41 adopts a longitudinal hole.

The charging valve works via following means: Aim the charging nozzle of the charging device at the charging hole 413 of the guiding core 41. Press the upper sealing ring 42 downward for air charging. Stagger the discharging hole 412 on the guiding core 41 from an inner wall of the charging valve installation hole 21, so that the discharging hole 412 is able to be pressed into the chamber body 2. Thereby, the air gets into the chamber body 2. After air charging, the charging nozzle is removed. Accordingly, the pressure exerted on the upper sealing ring 42 will be vanished. The guiding core 41 returns again to the same place by means of the elasticity brought by the spring 44. Therefore, the discharging hole 412 on the guiding core 41 condenses and stays close to the inner wall of the chamber body 2 for sealing. As a result, the air in the chamber body 2 does not leak out, and the effect of properly sealing the air is achieved.

A sealing method for afore waterproof camera includes steps of:
(1) install the charging valve installation hole 21 on the chamber body 2 of the waterproof camera;
(2) assemble the camera lens 1, the circuit board, the data line, and the chamber body 2 into a waterproof camera semi-finished product;
(3) install the one-way charging valve 4 inside the charging valve installation hole 21 on the chamber body 2;
(4) fill the chamber body 2 with air via the one-way charging valve 4, so that the one-way charging valve 4 is able to stop the air inside the chamber body 2 from leakage; an air pressure in the chamber body 2 adopts 0.3~0.8MPa;
(5) pour the waterproof camera semi-finished product into water and observing if there are any continuous bubbles bursting out; inspect a sealing performance of the camera lens via afore observation and separate an unqualified lens that busts out bubbles;
(6) pump air out of the chamber body 2 of the camera whose sealing performance is observed qualified for leaving a vacuum; a vacuity of the vacuum is -0.02~-0.04MPa;
(7) fill idler gas into the chamber body 2; the pressure of the nitrogen is 0.3~0.8MPa; the one-way charging valve 4 preferably stops the nitrogen inside the chamber body 2 from leakage; and
(8) seal the charging installation hole 21 with the waterproof sealing glue; thus obtaining the finished waterproof camera with sealing completed; the waterproof sealing glue adopts an X-super glue, such as the Super-XNO.8088 X-super glue made in Japan.

By means of the one-way charging valve 4 disposed on the chamber body 2 of the camera, random charging or discharging of the air could be conducted freely. Favorably, the waterproof camera semi-finished product will not be broken for inspection; an air pressure could be maintained after charging. Further, the sealing proficiency of present invention could be inspected during the production, so no finished product would be broken for inspection. Obviously, the means is convenient and the inspecting time is greatly shortened. While the unqualified semi-finished product is eliminated during the production, the inferior half-finished goods would not go through the next working procedure. Therefore, the productivity is enhanced, the wastage is reduced, and the loss is also decreased. While the test on the sealing efficiency is regarded as a total inspecting means during the production, the working efficiency could be evidently enhanced. Moreover, the idler gas further charged in the chamber body not only does not react with the electronic parts installed therein but also preferably obstructs the air from contacting the electronic parts. Therefore, the anticorrosive effect of the present invention is superior, which elongates the using time thereof.

Above embodiments demonstrate the inventive steps of the present invention for the patentability.

## Claims

1. A sealing method for a waterproof camera including steps of:
(1) installing a charging valve installation hole (21) on a chamber body (2) of said waterproof camera;
(2) assembling a camera lens (1), a circuit board, a data line, and said chamber body (2) into a waterproof camera semi-finished product;
(3) installing a charging valve (3) inside said charging valve installation hole (21) on said chamber body (2);
(4) filling said chamber body (2) with air;
(5) pouring said waterproof camera semi-finished product into water and observing if there are any continuous bubbles bursting out so as to inspect a sealing performance of said camera lens (1) and separate an unqualified lens that busts out bubbles;
(6) pumping air out of said chamber body (2) of said camera lens (1) whose sealing performance is observed qualified for leaving a vacuum;
(7) filling idler gas into said chamber body (2); and
(8) sealing said charging installation hole (21) with a waterproof sealing glue (5) so that a finished waterproof camera with sealing is completed.

2. The method as claimed in claim 1, wherein, an air pressure in said chamber body (2) of step (4) adopts 0.3~0.8spa.

3. The method as claimed in claim 1, wherein, a vacuity of said vacuum in step (6) is -0.02~-0.04MPa.

## Patentansprüche

1. Verschlussverfahren für eine wasserdichte Kamera, das folgende Schritte umfasst:
(1) Anbringen einer Füllventil-Montagebohrung (21) an einem Kammerkörper (2) der wasserdichten Kamera ;
(2) Zusammenbauen eines Kameraobjektivs (1), einer Leiterplatte, einer Datenleitung und des Kammerkörpers (2) zu einem Halberzeugnis einer wasserdichten Kamera;
(3) Montieren eines Füllventils (3) in der Füllventil-Montagebohrung (21) an dem Kammerkörper (2);
(4) Füllen des Kammerkörpers (2) mit Luft;
(5) Gießen des Halberzeugnisses einer wasserdichten Kamera in Wasser und Beobachten, ob kontinuierliche Blasen herausplatzen, um ein Dichtverhalten des Kameraobjektivs (1) zu prüfen und ein ungeeignetes Objektiv, das Blasen herausplatzen lässt, auszusortieren;
(6) Herauspumpen von Luft aus dem Kammerkörper (2) des Kameraobjektivs (1), dessen Dichtverhalten als geeignet zum Hinterlassen eines Vakuums betrachtet wird;
(7) Füllen von Inertgas in den Kammerkörper (2); und
(8) Verschließen der Füll-Montagebohrung mit einem wasserdichten Dichtklebstoff (5), sodass eine fertige wasserdichte Kamera mit Dichtung fertiggestellt wird.

2. Verfahren nach Anspruch 1, wobei ein Luftdruck in dem Kammerkörper (2) von Schritt (4) 0,3 bis 0,8 MPa annimmt.

3. Verfahren nach Anspruch 1, wobei eine Leere des Vakuums in Schritt (6) -0,02 bis -0,04 MPa beträgt.

## Revendications

1. Procédé de scellement pour une caméra étanche à l'eau, comprenant les étapes consistant à :
(1) installer un trou (21) d'installation de valve de chargement sur un corps de chambre (2) de ladite caméra étanche à l'eau ;
(2) assembler un objectif (1), une carte de circuit imprimé, une ligne de données et ledit corps de chambre (2) en un produit semi-fini de caméra étanche à l'eau ;
(3) installer une valve de chargement (3) à l'intérieur dudit trou (21) d'installation de valve de chargement sur ledit corps de chambre (2) ;
(4) remplir ledit corps de chambre (2) avec de l'air ;
(5) couler dans l'eau ledit produit semi-fini de caméra étanche à l'eau et observer s'il y a des bulles continues qui éclatent de façon à inspecter une performance de scellement dudit objectif (1) et à séparer un objectif non qualifié pour lequel on a observé des bulles qui éclatent ;
(6) pomper de l'air hors dudit corps de chambre (2) dudit objectif (1) dont la performance de scellement est observée comme étant qualifiée pour laisser un vide ;
(7) remplir ledit corps de chambre (2) par un gaz inerte ;
(8) sceller ledit trou d'installation de chargement (21) avec une colle de scellement étanche à l'eau (5) de telle sorte qu'une caméra étanche à l'eau finie avec un scellement soit terminée.

2. Procédé selon la revendication 1, dans lequel une pression d'air dans ledit corps de chambre (2) de l'étape (4) est de 0,3-0,8 MPa.

3. Procédé selon la revendication 1, dans lequel un niveau dudit vide à l'étape (6) est -0,02--0,04 MPa.
